# EUROPEAN PATENT SPECIFICATION

(11) **EP 4 524 936 B1**
(45) Date of publication and mention of the grant of the patent: **04.02.2026**
(21) Application number: 24195616.8
(22) Date of filing: 21.08.2024
(51) Int. Cl.: G09B 19/00, G06Q 10/0639, G06Q 50/20, G09B 19/16

(54) **APPARATUS AND METHOD OF ASSESSING INSTRUCTOR RATINGS ON A DEFINED RATING SCALE FOR SKEWNESS**
VORRICHTUNG UND VERFAHREN ZUR BEWERTUNG VON INSTRUKTORBEWERTUNGEN AUF EINER DEFINIERTEN EINSTUFUNGSSKALA FÜR SCHIEFHEIT
APPAREIL ET PROCÉDÉ D'ÉVALUATION D'ÉVALUATIONS D'INSTRUCTEURS SUR UNE ÉCHELLE D'ÉVALUATION DÉFINIE POUR L'OBLIQUITÉ

(30) Priority: 07.09.2023 US 202318463145
(43) Date of publication of application: 19.03.2025
(73) Proprietor: The Boeing Company, Arlington, VA 22202 (US)
(72) Inventor: MATHEW, Aswin, 22202 Arlington (US); KAMAT, Ameya, 22202 Arlington (US); RAY, Ashish Kumar, 22202 Arlington (US); SCHWAM, Mel E., 22202 Arlington (US); PRASAD, Neeraj, 22202 Arlington (US)
(74) Representative: St Clair Jones, Gregory Arthur Langley

(56) References cited:
- CN-A- 108 229 791
- NIKOLAIDIS YIANNIS ET AL: "On the student evaluation of university courses and faculty members' teaching perform", EUROPEAN JOURNAL OF OPERATIONAL RESEARCH, ELSEVIER, AMSTERDAM, NL, vol. 238, no. 1, 19 March 2014 (2014-03-19), pages 199 - 207, XP028664823, ISSN: 0377-2217, DOI: 10.1016/J.EJOR.2014.03.018

## Description

### FIELD

This disclosure relates generally to assessing instructor ratings, and more particularly to assessing instructor rating on a defined rating scale for skewness.

### BACKGROUND

When assessing instructor ratings awarded to students, one commonly employed approach is the use of skewness. Skewness, a statistical metric that measures the symmetry of data, can be used to provide valuable insights into instructor rating data. A skewness value of zero indicates a perfectly symmetric distribution, while a negative skewness value suggests a left-skewed distribution and a positive skewness value suggests a right-skewed distribution. That is, skewness serves as a measure to determine whether the distribution of instructors' ratings is distorted or asymmetrical. Skewness analysis can help identify potential biases in the distribution of instructor ratings, such as leniency or strictness when rating students.

Existing methods of calculating skewness do not adequately account for data measured on a defined rating scale, commonly used in instructor rating systems, which can lead to misleading or false data. This limitation hinders the accurate assessment of skewness in relation to the rating scale, restricting the ability to detect and address biases effectively. Additionally, existing methods only consider the skewness of individual instructors' ratings, thus impeding the ability to make informed decisions based on relative performance and competency levels.

CN108229791A, in accordance with its abstract, states the application relates to an electronic device and method for debriefing evidence-based training sessions, and an electronic device for collecting evidence during training sessions. The electronic device comprises: - a communications module for acquiring real-time training session data during a training session; - a real-time data acquisition module for generating time-stamped training session data; - an input unit for acquiring instructor rating data input by an instructor during the training session; - a real-time instructor rating module for generating time-stamped instructor rating data;- a storing module for storing real-time data of the training session in a data repository, including the time-stamped training session data and the time-stamped instructor rating data; - a debriefingmodule for retrieving real-time data of a training session from the data repository, replay the real-time data on a display, and update the instructor rating data in the data repository with updatedinstructor rating data received from an instructor during the replay.

### SUMMARY

The subject matter of the present application has been developed in response to the present state of the art, and in particular, in response to the problems of and needs created by, or not yet fully solved by, typical assessments of skewness. Generally, the subject matter of the present application has been developed to provide a method of assessing skewness in instructor ratings that overcomes at least some of the above-discussed shortcomings of prior art techniques.

Disclosed herein in an apparatus for assessing instructor ratings. The apparatus includes a processor. The apparatus also includes a memory that stores code executable by the processor to receive a raw instructor rating data set, the raw instructor rating data set including a plurality of ratings from an individual instructor. Each one of the plurality of rating corresponds to a numerical value on a defined rating scale. The memory also stores code executable by the processor to determine a rating skewness of the plurality of ratings by subtracting a second central tendency measure of the plurality of ratings from a first central tendency measure of the defined rating scale to generate a result, and dividing the result by a standard deviation of the plurality of ratings. The memory further stores code executable by the processor to compare the skewness of the plurality of ratings to at least one comparative rating skewness to generate a skewness comparison report. The memory also stores code executable by the processor to determine if the individual instructor requires instructor training based on the skewness comparison report. If determined that the individual instructor requires instructor training, the memory further stores code executable by the processor to identify a required instructor training to provide to the individual instructor. Additionally, the memory stores code executable by the processor to make the rating skewness, the skewness comparison report, and the required instructor training accessible to one or more end users. The preceding subject matter of this paragraph characterizes example 1 of the present disclosure.

The first central tendency measure is the mean of the defined rating scale.
The preceding subject matter of this paragraph characterizes example 2 of the present disclosure, wherein example 2 also includes the subject matter according to example 1, above.

Alternatively, the first central tendency measure is the mode of the defined rating scale. The preceding subject matter of this paragraph characterizes example 3 of the present disclosure, wherein example 3 also includes the subject matter according to any of examples 1-2, above.

The second central tendency measure is the mode of the plurality of ratings from the individual instructor. The preceding subject matter of this paragraph characterizes example 4 of the present disclosure, wherein example 4 also includes the subject matter according to any of examples 1-3, above.

The second central tendency measure is the median of the plurality of ratings from the individual instructor. The preceding subject matter of this paragraph characterizes example 5 of the present disclosure, wherein example 5 also includes the subject matter according to any of examples 1-4, above.

The first central tendency measure is a predetermined reference value. The preceding subject matter of this paragraph characterizes example 6 of the present disclosure, wherein example 6 also includes the subject matter according to any of examples 1-5, above.

The plurality of ratings corresponds to an evaluation period. The preceding subject matter of this paragraph characterizes example 7 of the present disclosure, wherein example 7 also includes the subject matter according to any of examples 1-6, above.

The required instructor training is determined based on a magnitude of the rating skewness in the skewness comparison report. The preceding subject matter of this paragraph characterizes example 8 of the present disclosure, wherein example 8 also includes the subject matter according to any of examples 1-7, above.

The defined rating scale is a numerical scale from 1 to 5. The preceding subject matter of this paragraph characterizes example 9 of the present disclosure, wherein example 9 also includes the subject matter according to any of examples 1-8, above.

The individual instructor is a flight instructor. The raw instructor rating data set includes performance ratings provided by the flight instructor after a flight training session. The preceding subject matter of this paragraph characterizes example 10 of the present disclosure, wherein example 10 also includes the subject matter according to any of examples 1-9, above.

The required instructor training identified for the flight instructor includes aviation-specific teaching methodologies and flight simulation techniques. The preceding subject matter of this paragraph characterizes example **11** of the present disclosure, wherein example **11** also includes the subject matter according to example 10, above.

The memory stores code executable by the processor to receive additional data sources. The additional data sources are made accessible to one or more end users. The preceding subject matter of this paragraph characterizes example 12 of the present disclosure, wherein example 12 also includes the subject matter according to any of examples 1-13, above.

The skewness comparison report includes a visual representation of the rating skewness of the raw instructors rating data set. The preceding subject matter of this paragraph characterizes example 13 of the present disclosure, wherein example 13 also includes the subject matter according to any of examples 1-12, above.

The memory stores code executable by the processor to receive a raw instructor rating data set corresponding to each one of a plurality of individual instructors. A skewness comparison report is generated for each one of the plurality of individual instructors. The generated skewness comparison reports are analyzed to compare performance of each individual instructor to others of the plurality of individual instructors. The preceding subject matter of this paragraph characterizes example 14 of the present disclosure, wherein example 14 also includes the subject matter according to any of examples 1-13, above.

Receiving a raw instructor rating data set includes receiving a raw instructor rating data set including a plurality of ratings corresponding to a plurality of evaluation periods. The memory stores code executable by the processor to track changes in the rating skewness of the plurality of ratings from each one of the plurality of evaluation periods. The memory also stores code executable by the processor to adjust the required instructor training based on observed changes in the rating skewness over time. The preceding subject matter of this paragraph characterizes example 15 of the present disclosure, wherein example 15 also includes the subject matter according to any of examples 1-14, above.

The memory stores code executable by the processor to analyze the rating skewness of the plurality of ratings from each one of the plurality of evaluation periods to identify trends in the rating skewness over the plurality of evaluation periods. The memory also stores code executable by the processor to generate a training recommendation based on the identified trends. The preceding subject matter of this paragraph characterizes example 16 of the present disclosure, wherein example 16 also includes the subject matter according to example 15, above.

Also disclosed herein is a method for assessing instructor ratings. The method includes receiving a raw instructor rating data set. The raw instructor rating data set includes a plurality of ratings from an individual instructor. Each one of the plurality of rating corresponding to a numerical value on a defined rating scale. The method also includes determining a rating skewness of the plurality of ratings by subtracting a second central tendency measure of the plurality of ratings from a first central tendency measure of the defined rating scale to generate a result, and dividing the result by a standard deviation of the plurality of ratings. The method further includes comparing the rating skewness of the plurality of ratings to at least one comparative rating skewness to generate a skewness comparison report. The method also includes determining if the individual instructor requires instructor training based on the skewness comparison report. If determined that the individual instructor requires instructor training, the method also includes identifying a required instructor training to provide to the individual instructor. The method additionally includes making the rating skewness, the skewness comparison report, and the required instructor training accessible to one or more end users. The preceding subject matter of this paragraph characterizes example 17 of the present disclosure.

The first central tendency measure is the mean of the defined rating scale. The preceding subject matter of this paragraph characterizes example 18 of the present disclosure, wherein example 18 also includes the subject matter according to example 17, above.

The second central tendency measure is the mode of the plurality of ratings from the individual instructor. The preceding subject matter of this paragraph characterizes example 19 of the present disclosure, wherein example 19 also includes the subject matter according to any of examples 17-18, above.

Also disclosed here is a program product for assessing instructor ratings comprising a (optionally non-transitory) computer readable storage medium storing code. The code is configured to be executable by a processor to perform operations including receiving a raw instructor rating data set. The raw instructor rating data set includes a plurality of ratings from an individual instructor. Each one of the plurality of ratings corresponding to a numerical value on a defined rating scale. The code is also configured to be executable by the processor to determine a rating skewness of the plurality of rating by subtracting a second central tendency measure of the plurality of ratings from a first central tendency measure of the defined rating scale to generate a result, and dividing the result by a standard deviation of the plurality of ratings. The code is further configured to be executable by the processor to compare the rating skewness of the plurality of ratings to at least one comparative rating skewness rating to generate a skewness comparison report. The code is additionally configured to be executable by the processor to determine if the individual instructor requires instructor training based on the skewness comparison report. If determined that the individual instructor requires instructor training, the code is also configured to be executable by the processor to identify the required instructor training to provide to the individual instructor. The code is also configured to be executable by the processor to make the rating skewness, the skewness comparison report, and the required instructor training accessible to one or more end users. The preceding subject matter of this paragraph characterizes example 20 of the present disclosure.

The described features, structures, advantages, and/or characteristics of the subject matter of the present disclosure may be combined in any suitable manner in one or more examples, including embodiments and/or implementations. In the following description, numerous specific details are provided to impart a thorough understanding of examples of the subject matter of the present disclosure. In other instances, additional features and advantages may be recognized in certain examples, embodiments, and/or implementations that may not be present in all examples, embodiments, or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.
The invention to which this European patent relates is set out in the appended claims.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter. The subject matter will be described and explained with additional specificity and detail through the use of the drawings, in which:
Figure 1 is a schematic block diagram illustrating one embodiment of a system for assessing instructor ratings for skewness;
Figure 2 is a schematic block diagram of an apparatus for assessing instructor ratings for skewness, according to one or more examples of the present disclosure;
Figure 3 is a schematic block diagram of another apparatus for assessing instructor ratings for skewness, according to one or more examples of the present disclosure;
Figure 4 is a schematic block diagram of another apparatus for assessing instructor ratings for skewness, according to one or more examples of the present disclosure;
Figure 5 is a schematic block diagram of a method of assessing instructor ratings for skewness, according to one or more examples of the present disclosure; and
Figure 6 is a schematic view of one example of a data availability module.

### DETAILED DESCRIPTION

Reference throughout this specification to "one example," "an example," or similar language means that a particular feature, structure, or characteristic described in connection with the example is included in at least one example of the subject matter of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the subject matter of the present disclosure, however, absent an express correlation to indicate otherwise, an implementation may be associated with one or more examples.

Furthermore, the described features, advantages, and characteristics of the embodiments may be combined in any suitable manner. One skilled in the relevant art will recognize that the embodiments may be practiced without one or more of the specific features or advantages of a particular embodiment. In other instances, additional features and advantages may be recognized in certain embodiments that may not be present in all embodiments.

These features and advantages of the embodiments will become more fully apparent from the following description and appended claims or may be learned by the practice of embodiments as set forth hereinafter. As will be appreciated by one skilled in the art, aspects of the present invention may be embodied as a system, method, and/or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module," or "system." Furthermore, aspects of the present invention may take the form of a computer program product embodied in one or more computer readable medium(s) having program code embodied thereon.

Disclosed herein are examples of apparatuses and methods of assessing instructor ratings for skewness. The following provides some features of at least some examples of the instructor rating assessment apparatus, methods, systems, and program products. Individual instructors are often required to award students with a rating (e.g., grade) after the completion of a class or training. Commonly, ratings are given to students, using a defined rating scale, where each value on the defined rating scale is a numerical value. As used herein, a defined rating scale refers to a rating system where ratings are given using whole numbers or fractional numbers within a specified rating scale range. For example, the defined rating scale may have a range of ratings from 1 to 5, where each of the values 1, 2, 3, 4, or 5, could be award to a student. **In** other examples, fractional numbers may also be included, for example, 1.5, 2.5, 3.5, or 4.5, could additionally be awarded to a student. In some examples, the defined rating scale is based on a likert scale, a psychometric rating scale where the numeric values correspond to a preference of an instructor towards a specific statement or topic. For example, each response option on the likert scale is assigned a numerical value, which could range from 1 to 5, with 1 indicating the lowest or least favorable response and 5 representing the highest or more favorable response. Response options provided to an instructor usually represent different levels of agreement or disagreement, satisfaction, frequency, or intensity. Accordingly, the likert scale allows for quantifying the extent of agreement, satisfaction, or measured attributes of the instructor with the student. In other examples, the defined rating scale is based on a pass or fail model, where a grade at or above a certain value is considered to be a passing grade and a grade below a certain value is considered to be a failing grade.

In the field of pilot and aviation training, the evaluation of students (e.g., pilots) by instructors holds significant importance. Ensuring that pilots receive comprehensive and effective training is paramount to their future performance. Instructors play an important role in assessing and assigning ratings to pilots based on their performance during a test or course. However, inherent biases or other factors can hinder the direct comparison of ratings from individual instructors to a standardized baseline or other instructors. Moreover, comparing the ratings of two different instructors is often challenging without a systematic approach. In order to address these limitations, instructor ratings can be assessed using a statistical metric of rating skewness. By assessing the distribution of ratings provided by instructors and comparing them against a comparative rating skewness, such as a baseline skewness, potential biases and behavioral patterns can be identified in an individual instructor. This information not only assists in unveiling underlying instructor tendencies, such as leniency or strictness, but can also be used to inform additional training needs of the individual instructors.

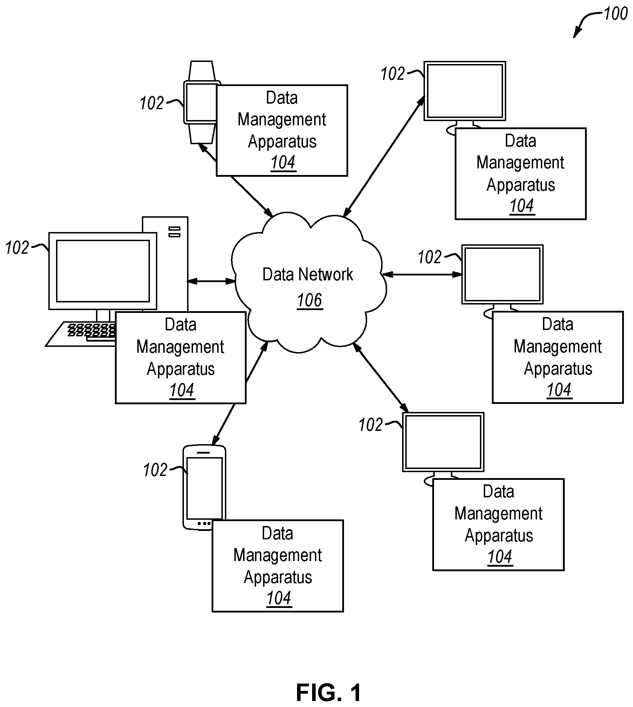

Figure 1 is a schematic block diagram illustrating one example of a general information system 100 for assessing instructor ratings for skewness and identifying required instructor training, if necessary. The system 100 includes one or more information handling devices 102, one or more data management apparatuses 104, and data networks 106. Even though a specific number of information handling devices 102, data management apparatuses 104, and data networks 106 are depicted in Figure 1, one of skill in the art will recognize, in light of this disclosures, that any number may be included in the system 100.

In one example, the system 100 includes one or more information handling devices 102. The information handling devices 102 may be embodied as one or more of a desktop computer, a laptop computer, a tablet computer, a smart phone, a smart watch, a smart TV, or another computing device comprising a processor (e.g., a central processing unit ("CPU"), a processor core, a field programmable gate array ("FPGA") or other programmable logic, an application specific integrated circuit "ASIC"), a controller, a microcontroller, and/or another semiconductor integrated circuit device), a volatile member, and/or a non-volatile storage medium, a display, a connection to a display, and/or the like. The information handling devices 102 are part of an instructor monitoring system that captures, monitors, accesses, stores, and provides testing data, (e.g., raw scores, ratings), student information and instructor information, and/or the like.

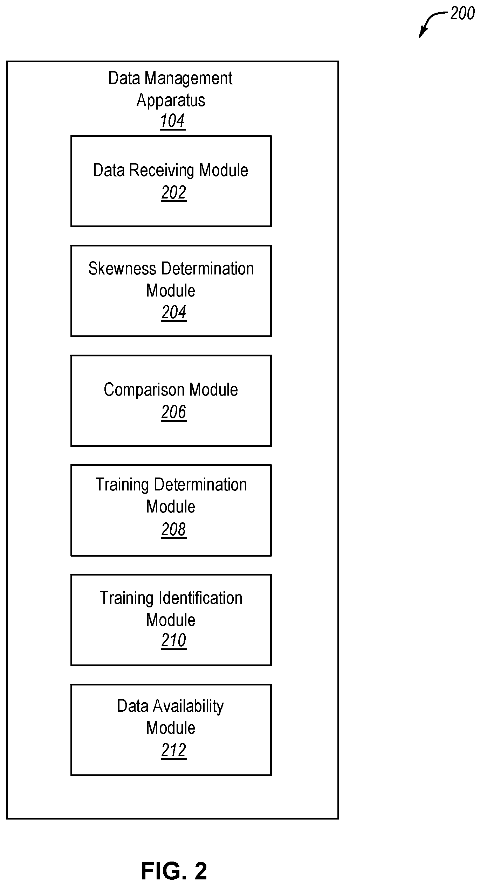

In general, in one example, the data management apparatus 104 is configured to receive a raw instructor rating data set associated with an individual instructor, determine a rating skewness of the raw instructor data set, compare the rating skewness of the raw instructor data set to at least one comparative rating skewness and generate a skewness comparison report, determine if the individual instructor requires instructor trainings and, if so, identify the required instructor training, and make all the data available to an end user. In one embodiment, the data management apparatus 104 is part of an instructor monitoring system that may be located at a student testing site, or at an off-site location. The data management apparatus 104 is described in more detail below with reference to Figures 2-4.

In one example, the data management apparatus 104 may include a hardware device such as a secure hardware dongle or other hardware appliance device (e.g., a set-top box, a network appliance, or the like) that attaches to a device such as a laptop computer, a server, a tablet computer, a smart phone, a network router or switch, or the like, either by a wired connection (e.g., a universal serial bus ("USB") connection) or a wireless connection (e.g., Bluetooth^{®}, Wi-Fi, near-field communication ("NFC"), or the like); that attaches to an electronic display device (e.g., a television or monitor using an HDMI port, a DisplayPort port, a Mini DisplayPort port, VGA port, DVI port, or the like); and/or the like. A hardware appliance of the data management apparatus 104 may include a power interface, a wired and/or wireless network interface, a graphical interface that attaches to a display, and/or a semiconductor integrated circuit device as described below, configured to perform the functions described herein regarding the data management apparatus 104.

The data management apparatus 104, in such an embodiment, may include a semiconductor integrated circuit device (e.g., one or more chips, die, or other discrete logic hardware), or the like, such as a field-programmable gate array ("FPGA") or other programmable logic, firmware for an FPGA or other programmable logic, microcode for execution on a microcontroller, an application-specific integrated circuit ("ASIC"), a processor, a processor core, or the like. In one embodiment, the data management apparatus 104 may be mounted on a printed circuit board with one or more electrical lines or connections (e.g., to volatile memory, a non-volatile storage medium, a network interface, a peripheral device, a graphical/display interface, or the like). The hardware appliance may include one or more pins, pads, or other electrical connections configured to send and receive data (e.g., in communication with one or more electrical lines of a printed circuit board or the like), and one or more hardware circuits and/or other electrical circuits configured to perform various functions of the data management apparatus 104.

The semiconductor integrated circuit device or other hardware appliance of the data management apparatus 104, in certain embodiments, includes and/or is communicatively coupled to one or more volatile memory media, which may include but is not limited to random access memory ("RAM"), dynamic RAM ("DRAM"), cache, or the like. In one example, the semiconductor integrated circuit device or other hardware appliance of the data management apparatus 104 includes and/or is communicatively coupled to one or more non-volatile memory media, which may include but is not limited to: NAND flash memory, NOR flash memory, nano random access memory (nano RAM or "NRAM"), nanocrystal wire-based memory, silicon-oxide based sub-10 nanometer process memory, graphene memory, Silicon-Oxide-Nitride-Oxide-Silicon ("SONOS"), resistive RAM ("RRAM"), programmable metallization cell ("PMC"), conductive-bridging RAM ("CBRAM"), magneto-resistive RAM ("MRAM"), dynamic RAM ("DRAM"), phase change RAM ("PRAM" or "PCM"), magnetic storage media (e.g., hard disk, tape), optical storage media, or the like.

The data network 106, in one embodiment, includes a digital communication network that transmits digital communications. The data network 106 may include a wireless network, such as a wireless cellular network, a local wireless network, such as a Wi-Fi network, a Bluetooth^{®} network, a near-field communication ("NFC") network, an ad hoc network, and/or the like. The data network 106 may include a wide area network ("WAN"), a storage area network ("SAN"), a local area network ("LAN") (e.g., a home network), an optical fiber network, the internet, or other digital communication network. The data network 106 may include two or more networks. The data network 106 may include one or more servers, routers, switches, and/or other networking equipment. The data network 106 may also include one or more computer readable storage media, such as a hard disk drive, an optical drive, non-volatile memory, RAM, or the like.

The wireless connection may be a mobile telephone network. The wireless connection may also employ a Wi-Fi network based on any one of the Institute of Electrical and Electronics Engineers ("IEEE") 802.11 standards. Alternatively, the wireless connection may be a Bluetooth^{®} connection. In addition, the wireless connection may employ a Radio Frequency Identification ("RFID") communication including RFID standards established by the International Organization for Standardization ("ISO"), the International Electrotechnical Commission ("IEC"), the American Society for Testing and Materials^{®} (ASTM^{®}), the DASH7^{™} Alliance, and EPCGlobal^{™}.

The wireless connection may be an infrared connection including connections conforming at least to the Infrared Physical Layer Specification ("IrPHY") as defined by the Infrared Data Association^{®} ("IrDA"^{®}). Alternatively, the wireless connection may be a cellular telephone network communication. All standards and/or connection types include the latest version and revision of the standard and/or connection type as of the filing date of this application.

Referring to Figure 2, one example of an apparatus 200 for assessing instructor ratings is shown. The apparatus 200 includes a data management apparatus 104. The data management apparatus 104 may include embodiments of a data receiving module 202, a skewness determination module 204, a comparison module 206, a training determination module 208, a training identification module 210, and a data availability module 212, which are described in more detail below.

**In** one example, the data receiving module 202 is configured to receive a raw instructor rating data set for an individual instructor. The raw instructor data set comprises a plurality of ratings, where each one of the plurality of ratings corresponds with a numerical value on a defined rating scale. Each one of the plurality of ratings correspond to an evaluation period, creating a cohesive grouping of ratings from multiple students during that specific evaluation period. As used herein an evaluation period refers to a defined timeframe or specific duration during which ratings are assigned by individual instructors to assess the performance, effectiveness, or progress of students or entities being evaluated. **In** other words, the evaluation period serves as a distinct unit of assessment. The raw instructor rating data set may contain multiple such groupings of ratings, each corresponding to a different evaluation period, and each separately assessable for skewness. The raw instructor rating data set may contain one instructor rating per student, such that the rating reflects a value/grade for an evaluation period, such as a single test or an overall rating for a course. Alternatively, the raw instructor rating data set may contain more than one instructor ratings per student, such that an individual student has multiple rating corresponding to different evaluation periods. In some examples, the multiple ratings per individual student can be consolidated into a single representative rating, effectively creating a new single evaluation period. This consolidation process may involve calculating the average of the multiple ratings, allowing for a single comprehensive rating that encapsulates the student's evaluation. In other examples, the apparatus 200 can assess each one of the different evaluation periods individually.

The individual instructor may be an instructor providing instruction to students of various types. In some examples, the individual instructor may serve as a flight instructor. Accordingly, the flight instructor may provide instruction to a range of individuals, including pilot trainees, novice pilots, experienced pilots seeking further training and education, among others. Moreover, the flight instructor's teaching environment can encompass a wide array of settings, such as flight school, aviation academies, airline training program, aircraft manufacturer training programs, board certification program, etc. The raw instructor rating data set may contain flight instructor ratings for a flight training session such as a single test or task, a multi-task assessment, or an overall rating for a course.

The data receiving module 202 may receive the raw instructor rating data set from the individual instructor, a manager, a supervising instructor of the individual instructor, an end user, and/or the like. The data receiving module 202 may receive or access real-time rating data, pre-captured data, locally stored data, and/or the like.

The skewness determination module 204 determines a rating skewness of the plurality of ratings for the individual instructor from an evaluation period. If more than one evaluation period is included in the raw instructor rating data set, each evaluation period will be separately analyzed. The rating skewness is calculated by subtracting a second central tendency measure of the plurality of ratings from a first central tendency measure of the defined rating scale to get a result, and dividing the result by a standard deviation of the plurality of ratings. The skewness equation can be summarized as, skewness = (CTM ₍ᵣₛ₎ - CTM ₍ₚᵣ₎) / SD ₍ₚᵣ₎, where CTM is the central tendency measure, *rs* is the defined rating scale, *pr* is the plurality of ratings, and *SD* is the standard deviation. As used herein, the central tendency measure is a statistical measurement that describes or represents the central or typical value of a dataset as a single value that summarizes the distribution of data points. Typically, the central tendency measure will be represented by the mean, median, or mode of the data set. Skewness of the data set can be calculated using any of the central tendency measures. However, depending on the data set, certain central tendency measures may better represent the skewness. For example, the first central tendency measure may be the mean of the defined rating scale and the second central tendency measure may be the mode or median of the plurality of ratings. In other examples, the first central tendency measure could be the mode or median of the defined rating scale, and the second central tendency measure may be the median or mode of the plurality of ratings. In yet other examples, the first central tendency measure may be a predetermined reference value within the defined rating scale, such as when a skewness value other than the calculated mean, median, or mode of the defined rating scale is preferred or required.

The rating skewness algorithm is different from algorithms traditionally used to calculate skewness. That is, the first central tendency measure has been changed, from traditional algorithms, to account for the defined rating scale. Accordingly, the first central tendency measure had been shifted from using a central tendency measure of the plurality of rating to using a central tendency measure of the defined rating scale. As skewness is a measure that indicates how far apart the central tendency measurements (e.g., mean, mode, or mode) of a distribution are in terms of standard deviations, shifting the first central tendency measure will not impact the standard deviation and will retain the second central tendency measure, relative to the rating scale. In other words, by shifting the first central tendency measure to the mean (or other central tendency measure) of the defined rating scale, the degree of asymmetry in the distribution of the ratings as a function of the defined rating scale can be determined. For example, when the defined rating scale is from 1 to 5, and when the first central tendency measure is the mean of the defined rating scale, the first central tendency measure is 3. Assuming that a rating of 3 is neutral, a value greater than 3 is considered high and a value less than 3 is considered low. In some examples, an assumption can be made that the second tendency measure values can determine leniency or strictness in ratings by individual instructors. That is, a second central tendency measure of greater than 3 may be considered lenient and a second central tendency measure of less than 3 may be considered strict.

The apparatus 200 also includes a comparison module 206. The comparison module 206 compares the skewness of the raw instructor rating data set to at least one comparative rating skewness and generates a skewness comparison report. In some examples, the at least one comparative rating skewness may be a baseline skewness. The baseline skewness serves as a reference point and can represent a desired skewness value or an optimal skewness that the instructor ratings should ideally exhibit. By comparing the skewness of the raw instructor rating data set to a baseline skewness, the apparatus 200 can identify any deviations or discrepancies from the expected distribution pattern of the plurality of ratings. **In** other examples, the at least one comparative rating skewness may be a skewness of a raw instructor rating data set from other individual instructors. In this way, raw instructor rating data from multiple individual instructors can be compared, highlighting the variation in their rating distributions. By examining how the skewness of the raw instructor rating data set compares to that of other instructors, valuable insights can be gained regarding the leniency or strictness of the instructor's ratings. The skewness comparison report highlights the differences between the raw instructor rating data set and the at least one comparative rating skewness. The skewness comparison report may include a numerical representation of the rating skewness of the raw instructors rating data set. For example, the skewness comparison report may include the result from the skewness determination module 204 numerically compared to the at least one comparative rating skewness. In other examples, the skewness comparison report may include a visual representation of the rating skewness of the raw instructors rating data set. For example, charts or graphs may be used to display the skewness comparison report to an end user. In some examples, the skewness comparison report may be graphed on a kurtosis plot to highlight a kurtosis value versus a leniency value of each data set, thus enhancing the visualization of the comparative analysis.

The training determination module 208 of the apparatus 200 is configured to determine if the individual instructor requires instructor training based on the skewness comparison report. By analyzing the skewness comparison report, the training determination module 208 can evaluate the distribution characteristics of the instructor rating data set. This evaluation aids in the identification of any deviations or irregularities in the ratings that may warrant the need for additional training and instructional support. The training determination module 208 may have a defined training threshold. The defined training threshold serves as a benchmark, allowing the determination module 208 to distinguish between subtle fluctuations and significant variations in the ratings. If the deviation observed in the individual instructor's rating skewness surpasses the defined training threshold, the training determination module 208 can automatically determine that training is required. In some examples, in response to determining that training is required, the training determination module 208 digitally messages, or otherwise alerts, the individual instructor that training is required, thereby notifying the individual instructor of the needed for training. Moreover, in certain examples, the training determination module 208 provides pertinent information about the required training to the individual instructor with the messages or alerts, such as scheduling information. Additionally, or alternatively, in response to determining that training is required, the training determination module 208 may message, or otherwise alert, a stakeholder, such as a supervisor, a manager, or an organization to which the individual instructor is affiliated, that training is required for the individual instructor, enabling the stakeholders to initiate any necessary follow-up actions in response to the training requirement. The follow-up actions prompted by the training determination module 208 could involve coordinating training logistics, allocating resources, or facilitating access to training materials, etc.

In some examples, if determined that the individual instructor requires instructor training by the training determination module 208, the training identification module 210 is configured to automatically identify a required instructor training, such as from a plurality of predetermined instructor trainings, to provide to the individual instructor. The training identification module 210 may automatically generate a training plan for the individual instructor based on training needs or areas of improvement. In some examples, the training identification module 210 may identify that general instructor training is required. For example, the general instructor training may address broad instructional techniques and methodologies. Additionally, general instructor training may ensure that fundamental teaching skills are reinforced and align with the overarching goal of enhancing instructional capabilities. In other examples, the training identification module 201 may identify a specific type or nature of training that should be provided to the individual instructor. In other words, the identified required instructor training may be tailored to address the specific areas of improvement or challenges highlighted in the report. This ensures that the training provided to the individual instructor is highly relevant and directly addresses the observed deficiencies in their instructional performance. The required instructor training may, in some examples, be determined based on a magnitude of the rating skewness in the skewness comparison report. For example, the time duration of the required instructor training may be increased or decreased based on the magnitude of the rating skewness. These adjustments could involve extending or shortening the required instructor training or incorporating additional modules to target specific areas of improvement. The instructor training identified by the training identification module 210 can be included in the message or alert provided to the instructor and/or stakeholder by the training determination module 208.

In some cases, the training identification module 210, in addition to utilizing the information gathered from the skewness comparison report, may use other relevant factors, such as time duration of teaching, trainee feedback surveys, etc., to determine the most suitable training approach. In the case of an individual instructor being a flight instructor, the required instructor training identified for the flight instructor may include aviation-specific teaching methodologies and flight simulation techniques. In some examples, required instructor training may encompass integrating flight simulation exercises within the training program to enhance practical skills in flight instruction.

After required instructor training is identified by the training identification module 210, the individual instructor is scheduled for the required instructor training. In some examples, the individual instructor may be sent a message, or otherwise alerted, that the required instructor training as been scheduled. Accordingly, the individual instructor is provided with the required instructor training by a training instructor or training program. The required instructor training may be provided by the training instructor or training program in an online format, encompassing options such as live interactive sessions, computer-guided modules, or prerecorded training materials. Alternatively, the required instructor training may be in-person training with the training instructor. The choice of training format may be contingent upon the unique demands and objectives associated with the required training needed and identified by the training identification module 210. The individual instructor may be provided with access (e.g., digital security credentials) to training materials, modules, or other resources. These resources are available to the individual instructor during the required instructor training, and in some examples, may be available to the individual instructor after the completion of the required training. The availability of resources port-training may support ongoing skill development in the individual instructor.

**In** response to determining that training is required by the training determination module 208, the required identified instructor training is provided to the individual instructor and the individual instructor receives the required identified instructor training. In some examples, the individual instructor is monitored during the required instructor training provided to the instructor to track the progress of the training program in real-time. By monitoring progress, the required instructor training can be dynamically adjusted as needed to ensure effectiveness and of the required instructor training and the progress of the individual instructor. After completion of the required instructor training, the individual instructor may, in some examples, be issued a certification or training badge to signify successful completion of the required instructor training. Additionally, the individual instructor may be surveyed, after completion of the required instructor training, to collect feedback about the effectiveness of the training. Post-training surveys may be conducted to gather insight on the effectiveness of the training program, and ensure that the required instructor training is addressing the needs of the individual instructors or future instructors receiving the required training. Additionally, the port-training surveys may inquired about the training's impact on teaching effectiveness and whether any further support or resources are requested or required.

The data availability module 212 is configured to make at least the rating skewness, the skewness comparison report, and the required instructor training accessible to one or more end users, end devices, other systems, and/or the like. For instance, the data availability module 212 may make the above data accessible via an application programming interface ("API"), a file sharing site, a remotely-accessible data store, and/or the like. In some examples, the end user is a manager who oversees the individual instructor. The end user can utilize the data made available through the data availability module 212 to analyze the performance and training needs of the individual instructor under their supervision. By examining the rating skewness, the skewness comparison report, and the required instructor training, the end user gains valuable insights into areas where improvements or adjustments in training methods may be required. This empowers the end user to make informed decisions regarding the professional development and performance management of their instructors. In specific industries like aviation, a head of training within a training and safety organization can benefit from accessing the data availability module 212. By reviewing the competency rating comparison of pilots and instructors, the head of training can identify areas where training methods and practices need improvement to enhance overall aviation safety. The ability to access the relevant data helps with monitoring trends, identifying training gaps, and implementing targeted strategies from improvement.

In some examples, the data availability module 212 may be configured to receive additional data sources applicable to the individual instructor. For example, additional data sources may include trainee feedback surveys, historical skewness comparison reports, records of completed training, etc. Accordingly, the additional data sources are made accessible to one or more end users, providing a comprehensive and well-informed approach to instructor assessment and training decision-making.

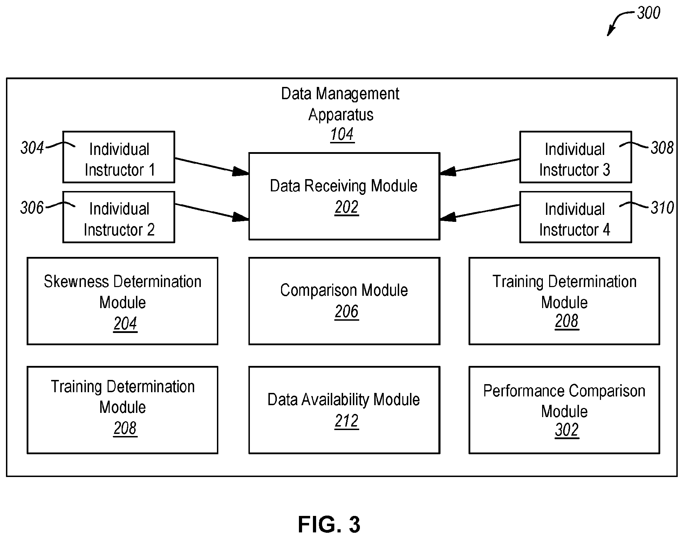

Referring to Figure 3, another embodiment of an apparatus 300 for assessing instructor ratings is shown. The apparatus 300 includes a data management apparatus 104. The data management apparatus 104 may include embodiments of a data receiving module 202, a skewness determination module 204, a comparison module 206, a training determination module 208, a training identification module 210, and a data availability module 212 as described above and in more detail below. Furthermore, the data management apparatus 104 may include instances of a performance comparison module 302 which is described in more detail below.

The data receiving module 202 may be configured to receive a raw instructor rating data set corresponding to a plurality of individual instructors. For example, the data receiving module 202 may receive a raw instructor rating data set corresponding to a first individual instructor 304, a second individual instructor 306, a third individual instructor 308, and a fourth individual instructor 310. Even though a specific number of individual instructors are shown, one of skill in the art will recognize, in light of this disclosure, that any number of individual instructors may be included in the apparatus 300. The raw instructor rating data set of each one of the plurality of individual instructors (304, 306, 308, 310) includes a plurality of ratings corresponding to at least one evaluation period. In some examples, the raw instructor rating data set for each one of the plurality of individual instructors may correspond to more than one evaluation period. That is, more than one instructor rating per student may be included in the raw instructor rating data set and can be consolidated or analyzed separately.

The skewness determination module 204 will separately determine a rating skewness of the plurality of ratings for each one of the plurality of individual instructor (304, 306, 308, 310) for each evaluation period, if more than one evaluation period is included in the raw instructor rating data set. That is, the rating skewness will be calculated by subtracting a second central tendency measure of the plurality of ratings of one of the plurality of individual instructors from a first central tendency measure of the defined rating scale to get a result, and dividing the result by the standard deviation of the plurality of ratings of the one of the plurality of individual instructors. As the same first central tendency measure of the defined rating scale is applied to each one of the plurality of individual instructors, when calculating a rating skewness for the same evaluation period, the rating skewness are standardized, facilitating relative performance comparisons at a later stage.

The comparison module 206 will compare the rating skewness for each one of the plurality of individual instructors (304, 306, 308, 310) to at least one comparative rating skewness and generate a skewness comparison report for each one of the individual instructors (304, 306, 308, 310). In some examples, the at least one comparative rating skewness is a baseline skewness, such that each rating skewness is compared to the same baseline skewness. In other examples, the at least one comparative rating skewness is the rating skewness of others of the individual instructors (304, 306, 308, 310). For example, the first individual instructor 304 may be compared to the second individual instructor 306 and/or the third individual instructor 308 and/or the fourth individual instructor 310. In some cases, when the rating skewness of an individual instructor is compared to others of the plurality of individual instructors (304, 306, 308, 310), each one of the skewness comparison reports may include the same information. The skewness comparison report may include the rating skewness of each one of the plurality of individual instructors (304, 306, 308, 310) numerically or in a visual representation, such as a kurtosis plot. The training determination module 208 and training identification module 210 are configured to separately determine and identify training for each one of the plurality of individual instructors (304, 306, 308, 310) based on the corresponding skewness comparison report.

The data availability module 212 is configured to make at least the rating skewness, the skewness comparison report, and the required instructor training for each one of the plurality individual instructors (304, 306, 308, 310) accessible to one or more end users. The data availability module 212 may include drill down capabilities. Drill down capabilities may be categorize the data into specific students, locations, of other identifying categories. For example, drill down capabilities may be used to identify which airline a student, who was evaluated by an individual instructor, is from. Additionally, the drill down capabilities may be used to identify the specific student testing site where the student evaluation took place. Accordingly, drill down capabilities allow the data availability module 212 to organize data into specific categories. That is, the drill down capabilities allows for further comparisons between the specific categories, such as specific student testing sites, students organizations, etc.

A performance comparison module 302 is configured to analyze the generated skewness comparison reports to compare performance of each one of the plurality of individual instructor (304, 306, 308, 310) to other ones of the plurality of individual instructors (304, 306, 308, 310). Comparing individual instructors against their peers, can shed light on individual instructor's strengths, areas for improvement, and unique instructional approaches. In some cases, this can empower end users to use the data to foster a culture of continuous improvement and tailored instructor training, ultimately enriching the quality of education and training provided by the individual instructors.

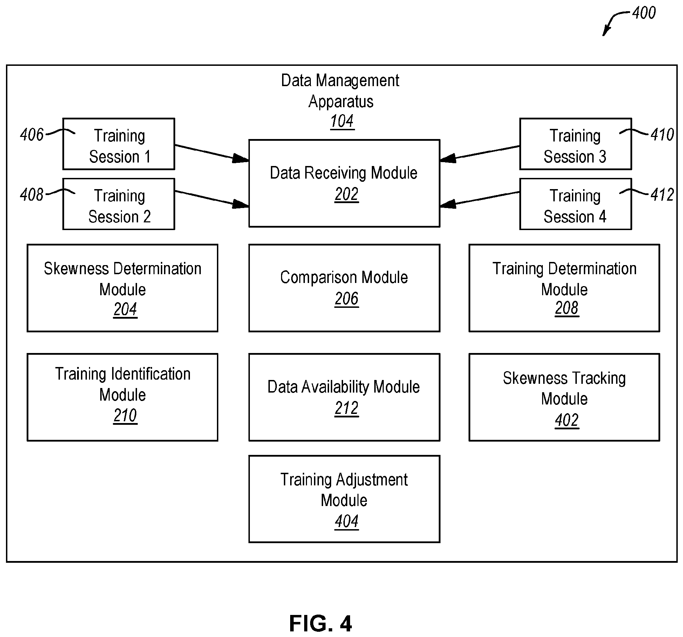

Referring to Figure 4, another embodiment of an apparatus 400 for assessing instructor ratings is shown. The apparatus 400 includes a data management apparatus 104. The data management apparatus 104 may include embodiments of a data receiving module 202, a skewness determination module 204, a comparison module 206, a training determination module 208, a training identification module 210, and a data availability module 212 as described above and in more detail below. Furthermore, the data management apparatus 104 may include instances of a skewness tracking module 402 and a training adjustment module 404.

The data receiving module 202 may be configured to receive a raw instructor rating data set corresponding to a plurality of evaluation periods (406, 408, 410, 412). For example, the data receiving module 202 may receive a raw instructor rating data set corresponding to a first evaluation period 406, a second evaluation period 408, a third evaluation period 410, and a fourth evaluation period 412. Even though a specific number of evaluation periods are shown, one of skill in the art will recognize, in light of this disclosure, that any number of evaluation periods may be included in the apparatus 400. The raw instructor rating data set is specific to a single individual instructor and includes data about a plurality of evaluation periods (406, 408, 401, 412), where each one of the plurality of evaluation periods (406, 408, 401, 412) includes a plurality of ratings. In some examples, the material taught and assessed during the evaluation periods (406, 408, 410, 412) is the same. For example, the material taught and assessed during each evaluation periods (406, 408, 410, 412) is the same, such as the same task or course, taught at different points in time. In other examples, the material taught and assessed during the evaluation periods (406, 408, 401, 412) may encompass different materials taught and assessed at different points in time.

The skewness tracking module 402 is configured to track changes in the rating skewness of the plurality of ratings from each one of the plurality of evaluation periods. That is, the skewness tracking module 402 analyzes changes in the distribution of ratings over time. Changes in the rating skewness can indicate potential variations in instructional effectiveness or changes in the quality of evaluations over time. The skewness tracking module 402 enables the identification of emerging trends, areas of improvement, or noteworthy developments within the instructor rating data. The capacity to detect temporal shifts contributes to a comprehensive and up-to-date understanding of instructor performance, empowering data-driven decision-making and informed adjustments to training programs or instructional approaches.

The training adjustment module 404 is configured to adjust the required instructor training based on observed changes in the rating skewness over time. By tracking changes in the rating skewness over time, the training adjustment module 404 allows for dynamic adjustments to the individual instructor's training programs, leveraging the data to make informed and data-driven decisions regarding the content, focus, and delivery of the required instructor training. The training adjustment module 404 may refine the required instructor training to address specific areas of improvement or emerging challenges. This adaptive approach ensures that the training provided to the individual instructor remains relevant, impactful, and aligned with their evolving needs.

The data availability module 212 may be further configured to analyze the rating skewness from each one of the plurality of evaluation periods to identify trends int eh rating skewness over the plurality of evaluation periods. In other examples, according to apparatus 300, trends in the rating skewness of a plurality of individual instructors for a single evaluation period may be identified. Trends may include recurring patterns or fluctuations. Training recommendations can be generated based on the identified trends.

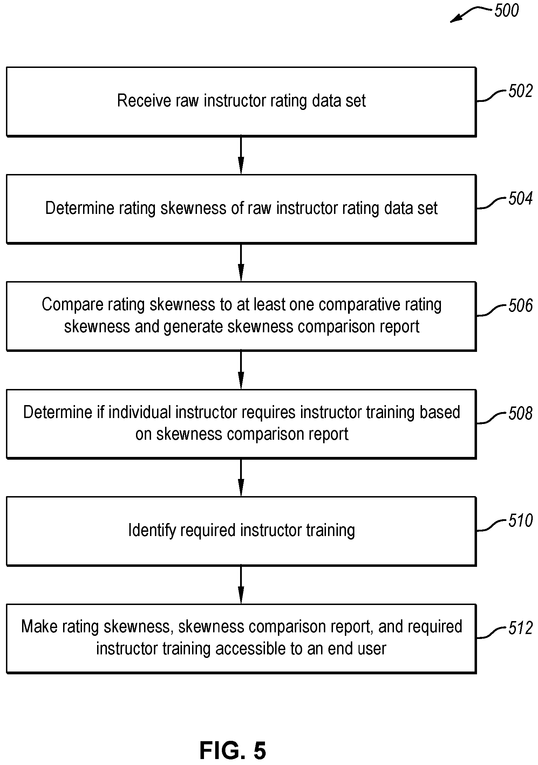

Referring to Figure 5, a method 500 for assessing instructor ratings is shown. The method includes (block 502) receiving a raw instructor rating data set. The raw instructor rating data set comprises a plurality of ratings from an individual instructor, each one of the plurality of rating corresponding to a numerical value on a defined rating scale. The plurality of ratings corresponds to an evaluation period. In some examples, the raw instructor rating data set may contain a more than one plurality of ratings each one of the plurality of ratings corresponding to one of a plurality of evaluation periods. Additionally, or alternatively, in other examples, a raw instructor rating data set may be provided for each one of a plurality of individual instructors.

The method 500 also includes (block 504) determining a rating skewness of the plurality of ratings. The rating skewness is determined by subtracting a second central tendency measure of the plurality of ratings from a first central tendency measure of the defined rating scale to generate a result, and dividing the result by a standard deviation of the plurality of ratings. If more than one evaluation period is included in the raw instructor rating data set each evaluation period may be separately analyzed. Any central tendency measure may be used to represent the data set. For example, the first central tendency measure may be the mean of the defined rating scale and the second central tendency measure may be the mode or median of the plurality of ratings. In other examples, the first central tendency measure could be the mode or median of the defined rating scale, and the second central tendency measure may be the median or mode of the plurality of ratings. In yet other examples, the first central tendency measure may be a predetermined reference value within the defined rating scale, such as when a skewness value other than the calculated mean, median, or mode of the defined rating scale is preferred or required. However, depending on the data set, certain central tendency measures may better represent the skewness.

The method 500 further includes comparing the rating skewness of the plurality of ratings to at least one comparative rating skewness to generate a skewness comparison report. In some examples, the at least one comparative rating skewness is a baseline skewness. In other examples, the at least one comparative rating skewness may be a skewness of a raw instructor rating data set from another individual instructor. In this way, the raw instructor rating data from multiple individual instructors can be compared, highlighting the variation in their rating distributions. The skewness comparison report may represent the results may be numerically or visually displayed.

The method 500 also includes (block 508) determining if the individual instructor requires instructor training based on the skewness comparison report. The method 500 further includes (block 510) identifying a required instructor training to provide to the individual instructor, if determined that the individual instructor required instructor training. In the case of an individual instructor being a flight instructor, the required instructor trailing identified for the flight instructor may include aviation-specific teaching methodologies and flight simulation techniques.

The method additionally included (block 512) making the rating skewness, the skewness comparison report, and the required instructor training accessible to one or more end users. The end user can view and analyze the available data to assess the performance and training needs of the individual instructor. This may allow the user end to make informed decisions regarding the professional development and performance management of the individual instructor or the plurality of individual instructors.

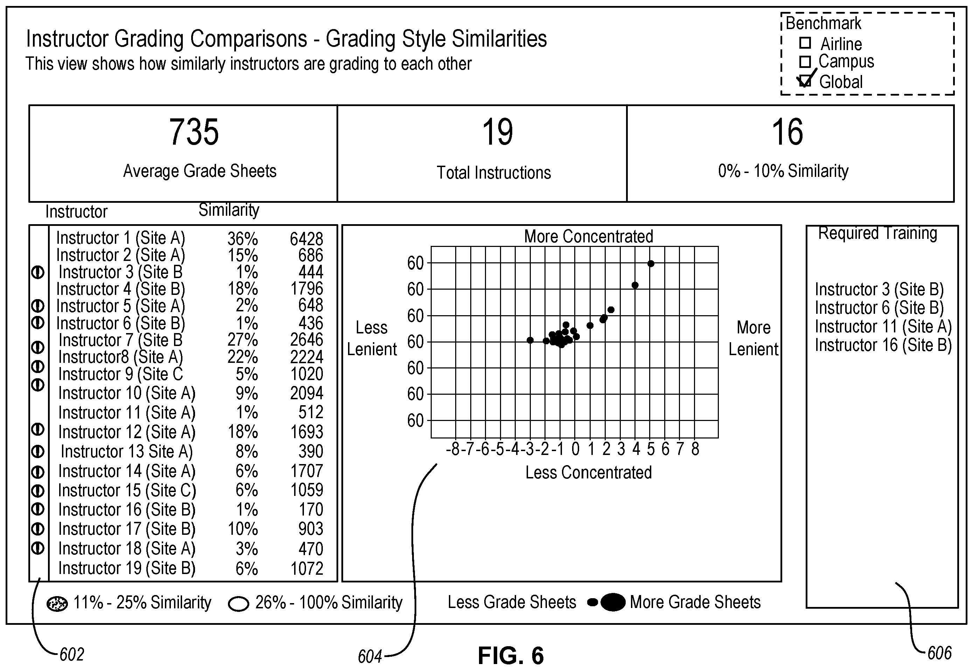

Referring to Figure 6, one example of data made available in the data availability module 212 is shown. The data availability module 212 is configured to make data available to one or more end users. As shown in Figure 6, at least some data is shown in the data availability module 212. Other data, not shown, may be available by running additional reports, highlighting or clicking on a specific instructor, etc. For example, the data shown in Figure 6 highlights the grading style similarities between a plurality of individual instructors. However, one of skill in the art will recognize, in light of this disclosure, that data may be displayed and organized in any manner as required or determined by the one or more end users.

The data availability module 212 shown includes a list of individual instructors 602. The individual instructors by be from a plurality of student testing sites, such as site A, site B, and site C. Accordingly, the data can be further organized into individual instructors from only one student testing site (e.g., campus), a subset of testing sites (e.g., regional or state-wide testing sites), or the whole group of individual instructors (e.g., global). The data availability module 212 also includes comparison data 604, which in some cases may be displayed as a visual representation of the rating skewness of the individual instructors. As shown, the comparison data 604 is displayed as a graph plotting the skewness rating of each of the individual instructors. The data availability module 212 further includes identifying required individual instructors who needs instructor training. For example, the data availability module 212 may display a list of individual instructors who require additional training 606.

Many of the functional units described in this specification have been labeled as modules, to more particularly emphasize their implementation independence. For example, a module may be implemented as a hardware circuit comprising custom very large scale integrated ("VLSI") circuits or gate arrays, off-the-shelf semiconductors such as logic chips, transistors, or other discrete components. A module may also be implemented in programmable hardware devices such as a field programmable gate array ("FPGA"), programmable array logic, programmable logic devices or the like.

Modules may also be implemented in software for execution by various types of processors. An identified module of program code may, for instance, comprise one or more physical or logical blocks of computer instructions which may, for instance, be organized as an object, procedure, or function. Nevertheless, the executables of an identified module need not be physically located together but may comprise disparate instructions stored in different locations which, when joined logically together, comprise the module and achieve the stated purpose for the module.

Indeed, a module of program code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different storage devices, and may exist, at least partially, merely as electronic signals on a system or network. Where a module or portions of a module are implemented in software, the program code may be stored and/or propagated on in one or more computer readable medium(s).

The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory ("RAM"), a read-only memory ("ROM"), an erasable programmable read-only memory ("EPROM" or Flash memory), a static random access memory ("SRAM"), a portable compact disc read-only memory ("CD-ROM"), a digital versatile disk ("DVD"), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture ("ISA") instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider). In some embodiments, electronic circuitry including, for example, programmable logic circuitry, field-programmable gate arrays ("FPGA"), or programmable logic arrays ("PLA") may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and computer program products according to various embodiments of the present invention. In this regard, each block in the schematic flowchart diagrams and/or schematic block diagrams may represent a module, segment, or portion of code, which comprises one or more executable instructions of the program code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of equivalency of the examples herein are to be embraced within their scope.

## Claims

1. An apparatus (200) for assessing instructor ratings, comprising:
a processor; and
a memory that stores code executable by the processor to:
receive (202) a raw instructor rating data set, the raw instructor rating data set comprising a plurality of ratings from an individual instructor, each one of the plurality of rating corresponding to a numerical value on a defined rating scale;
determine (204) a rating skewness of the plurality of ratings by subtracting a second central tendency measure of the plurality of ratings from a first central tendency measure of the defined rating scale to generate a result, and dividing the result by a standard deviation of the plurality of ratings;
compare (206) the skewness of the plurality of ratings to at least one comparative rating skewness to generate a skewness comparison report;
determine (208) if the individual instructor requires instructor training based on the skewness comparison report;
if determined (210) that the individual instructor requires instructor training, identify a required instructor training to provide to the individual instructor; and
make (212) the rating skewness, the skewness comparison report, and the required instructor training accessible to one or more end users.

2. The apparatus (200) of claim **1,** wherein the first central tendency measure is the mean of the defined rating scale.

3. The apparatus (200) of claim 1, wherein the first central tendency measure is the mode of the defined rating scale.

4. The apparatus (200) of any preceding claim, wherein the second central tendency measure is the mode of the plurality of ratings from the individual instructor.

5. The apparatus (200) of claims 1, 2 or 3, wherein the second central tendency measure is the median of the plurality of ratings from the individual instructor.

6. The apparatus (200) of claim 1, wherein the first central tendency measure is a predetermined reference value.

7. The apparatus (200) of any preceding claim, wherein the plurality of ratings corresponds to an evaluation period.

8. The apparatus (200) of any preceding claim, wherein the required instructor training is determined based on a magnitude of the rating skewness in the skewness comparison report.

9. The apparatus (200) of any preceding claim, wherein the defined rating scale is a numerical scale from 1 to 5.

10. The apparatus (200) of any preceding claim, wherein:
the individual instructor is a flight instructor; and
the raw instructor rating data set comprises performance ratings provided by the flight instructor after a flight training session, optionally,
wherein the required instructor training identified for the flight instructor includes aviation-specific teaching methodologies and flight simulation techniques.

11. The apparatus (200) of any preceding claim, wherein:
the memory further stores code executable by the processor to receive additional data sources; and
the additional data sources are made accessible to one or more end users, and/or,
wherein the skewness comparison report comprises a visual representation of the rating skewness of the raw instructors rating data set.

12. The apparatus (200) of any preceding claim, wherein the memory further stores code executable by the processor to:
receive a raw instructor rating data set corresponding to each one of a plurality of individual instructors (304-310);
generate a skewness comparison report for each one of the plurality of individual instructors; and
analyze (302) the generated skewness comparison reports to compare performance of each individual instructor to others of the plurality of individual instructors.

13. The apparatus (200) of claim 12 wherein:
receiving the raw instructor rating data set comprises receiving a raw instructor rating data set comprising a plurality of ratings corresponding to a plurality of evaluation periods (406-412); and
the memory further stores code executable by the processor to:
track (402) changes in the rating skewness of the plurality of ratings from each one of the plurality of evaluation periods; and
adjust (404) the required instructor training based on observed changes in the rating skewness over time, optionally,
wherein the memory further stores code executable by the processor to:
analyze the rating skewness of the plurality of ratings from each one of the plurality of evaluation periods to identify trends in the rating skewness over the plurality of evaluation periods; and
generate a training recommendation based on the identified trends.

14. A method (500) for assessing instructor ratings, comprising:
receiving (502) a raw instructor rating data set, the raw instructor rating data set comprising a plurality of ratings from an individual instructor, each one of the plurality of rating corresponding to a numerical value on a defined rating scale;
determining (504) a rating skewness of the plurality of ratings by subtracting a second central tendency measure of the plurality of ratings from a first central tendency measure of the defined rating scale to generate a result, and dividing the result by a standard deviation of the plurality of ratings;
comparing (506) the rating skewness of the plurality of ratings to at least one comparative rating skewness to generate a skewness comparison report;
determining (508) if the individual instructor requires instructor training based on the skewness comparison report;
if determined that the individual instructor requires instructor training, identifying (510) a required instructor training to provide to the individual instructor; and
making (512) the rating skewness, the skewness comparison report, and the required instructor training accessible to one or more end users.

15. A program product for assessing instructor ratings comprising a computer readable storage medium storing code, the code being configured to be executable by a processor to perform operations comprising:
receiving a raw instructor rating data set, the raw instructor rating data set comprising a plurality of ratings from an individual instructor, each one of the plurality of rating corresponding to a numerical value on a defined rating scale;
determining a rating skewness of the plurality of rating by subtracting a second central tendency measure of the plurality of ratings from a first central tendency measure of the defined rating scale to generate a result, and dividing the result by a standard deviation of the plurality of ratings;
comparing the rating skewness of the plurality of ratings to at least one comparative rating skewness rating to generate a skewness comparison report;
determining if the individual instructor requires instructor training based on the skewness comparison report;
if determined that the individual instructor requires instructor training, identifying the required instructor training to provide to the individual instructor; and
making the rating skewness, the skewness comparison report, and the required instructor training accessible to one or more end users.

## Patentansprüche

1. Vorrichtung (200) zur Bewertung von Instruktorbewertungen, umfassend:
einen Prozessor; und
einen Speicher, der vom Prozessor ausführbaren Code speichert, um:
einen Roh-Instruktorbewertungsdatensatz zu empfangen (202), wobei der Roh-Instruktorbewertungsdatensatz eine Vielzahl von Bewertungen eines einzelnen Instruktors umfasst, wobei jede Bewertung der Vielzahl von Bewertungen einem numerischen Wert auf einer definierten Einstufungsskala entspricht;
eine Bewertungsschiefe der Vielzahl von Bewertungen zu bestimmen (204), indem ein zweites Maß der zentralen Tendenz der Vielzahl von Bewertungen von einem ersten Maß der zentralen Tendenz der definierten Einstufungsskala subtrahiert wird, um ein Ergebnis zu erzeugen, und indem das Ergebnis durch eine Standardabweichung der Vielzahl von Bewertungen dividiert wird;
die Schiefe der Vielzahl von Bewertungen mit mindestens einer vergleichenden Bewertungsschiefe zu vergleichen (206), um einen Schiefe-Vergleichsbericht zu erzeugen;
zu bestimmen (208), ob der einzelne Instruktor basierend auf dem Schiefe-Vergleichsbericht eine Instruktorenschulung benötigt;
wenn bestimmt wird (210), dass der einzelne Instruktor eine Instruktorenschulung benötigt, eine erforderliche Instruktorenschulung zu identifizieren, die dem einzelnen Instruktor bereitzustellen ist; und
die Bewertungsschiefe, den Schiefe-Vergleichsbericht und die erforderliche Instruktorenschulung einem oder mehreren Endnutzern zugänglich zu machen (212).

2. Vorrichtung (200) nach Anspruch 1, wobei das erste Maß der zentralen Tendenz der Mittelwert der definierten Einstufungsskala ist.

3. Vorrichtung (200) nach Anspruch 1, wobei das erste Maß der zentralen Tendenz der Modus der definierten Einstufungsskala ist.

4. Vorrichtung (200) nach einem der vorhergehenden Ansprüche, wobei das zweite Maß der zentralen Tendenz der Modus der Vielzahl von Bewertungen des einzelnen Instruktors ist.

5. Vorrichtung (200) nach einem der Ansprüche 1, 2 oder 3, wobei das zweite Maß der zentralen Tendenz der Median der Vielzahl von Bewertungen des einzelnen Instruktors ist.

6. Vorrichtung (200) nach Anspruch 1, wobei das erste Maß der zentralen Tendenz ein vorbestimmter Referenzwert ist.

7. Vorrichtung (200) nach einem der vorhergehenden Ansprüche, wobei die Vielzahl von Bewertungen einem Bewertungszeitraum entspricht.

8. Vorrichtung (200) nach einem der vorhergehenden Ansprüche, wobei die erforderliche Instruktorenschulung basierend auf einer Größe der Bewertungsschiefe im Schiefe-Vergleichsbericht bestimmt wird.

9. Vorrichtung (200) nach einem der vorhergehenden Ansprüche, wobei die definierte Einstufungsskala eine numerische Skala von 1 bis 5 ist.

10. Vorrichtung (200) nach einem der vorhergehenden Ansprüche, wobei:
der einzelne Instruktor ein Fluglehrer ist; und
der Roh-Instruktorbewertungsdatensatz Leistungsbewertungen umfasst, die vom Fluglehrer nach einer Flugtrainingssitzung bereitgestellt wurden, optional
wobei die für den Fluglehrer identifizierte erforderliche Instruktorenschulung luftfahrtspezifische Lehrmethodiken und Flugsimulationstechniken umfasst.

11. Vorrichtung (200) nach einem der vorhergehenden Ansprüche, wobei:
der Speicher ferner Code speichert, der vom Prozessor ausführbar ist, um zusätzliche Datenquellen zu empfangen; und
die zusätzlichen Datenquellen einem oder mehreren Endnutzern zugänglich gemacht werden, und/oder
wobei der Schiefe-Vergleichsbericht eine visuelle Darstellung der Bewertungsschiefe des Roh-Instruktorbewertungsdatensatzes umfasst.

12. Vorrichtung (200) nach einem der vorhergehenden Ansprüche, wobei der Speicher ferner Code speichert, der vom Prozessor ausführbar ist, um:
einen Roh-Instruktorbewertungsdatensatz zu empfangen, der jeweils einem der Vielzahl von einzelnen Instruktoren (304-310) entspricht;
für jeden der Vielzahl von einzelnen Instruktoren einen Schiefe-Vergleichsbericht zu erzeugen; und
die erzeugten Schiefe-Vergleichsberichte zu analysieren (302), um die Leistung jedes einzelnen Instruktors mit der Leistung der anderen der Vielzahl von einzelnen Instruktoren zu vergleichen.

13. Vorrichtung (200) nach Anspruch 12, wobei:
das Empfangen des Roh-Instruktorbewertungsdatensatzes das Empfangen eines Roh-Instruktorbewertungsdatensatzes umfasst, der eine Vielzahl von Bewertungen umfasst, die einer Vielzahl von Bewertungszeiträumen (406-412) entsprechen; und
der Speicher ferner Code speichert, der vom Prozessor ausführbar ist, um:
Änderungen in der Bewertungsschiefe der Vielzahl von Bewertungen aus jedem der Vielzahl von Bewertungszeiträumen zu verfolgen (402); und
die erforderliche Instruktorenschulung basierend auf beobachteten Änderungen in der Bewertungsschiefe über die Zeit anzupassen (404), optional
wobei der Speicher ferner Code speichert, der vom Prozessor ausführbar ist, um:
die Bewertungsschiefe der Vielzahl von Bewertungen aus jedem der Vielzahl von Bewertungszeiträumen zu analysieren, um Trends in der Bewertungsschiefe über die Vielzahl der Bewertungszeiträume zu identifizieren; und
eine Schulungsempfehlung basierend auf den identifizierten Trends zu erzeugen.

14. Verfahren (500) zur Bewertung von Instruktorbewertungen, umfassend:
Empfangen (502) eines Roh-Instruktorbewertungsdatensatzes, wobei der Roh-Instruktorbewertungsdatensatz eine Vielzahl von Bewertungen eines einzelnen Instruktors umfasst, wobei jede Bewertung der Vielzahl von Bewertungen einem numerischen Wert auf einer definierten Einstufungsskala entspricht;
Bestimmen (504) einer Bewertungsschiefe der Vielzahl von Bewertungen, indem ein zweites Maß der zentralen Tendenz der Vielzahl von Bewertungen von einem ersten Maß der zentralen Tendenz der definierten Einstufungsskala subtrahiert wird, um ein Ergebnis zu erzeugen, und indem das Ergebnis durch eine Standardabweichung der Vielzahl von Bewertungen dividiert wird;
Vergleichen (506) der Bewertungsschiefe der Vielzahl von Bewertungen mit mindestens einer vergleichenden Bewertungsschiefe, um einen Schiefe-Vergleichsbericht zu erzeugen;
Bestimmen (508), ob der einzelne Instruktor basierend auf dem Schiefe-Vergleichsbericht eine Instruktorenschulung benötigt;
falls bestimmt wird, dass der einzelne Instruktor eine Instruktorenschulung benötigt, Identifizieren (510) einer erforderlichen Instruktorenschulung, die dem einzelnen Instruktor bereitzustellen ist; und
Zugänglichmachen (512) der Bewertungsschiefe, des Schiefe-Vergleichsberichts und der erforderlichen Instruktorenschulung für einen oder mehrere Endnutzer.

15. Programprodukt zur Bewertung von Instruktorbewertungen, umfassend ein computerlesbares Speichermedium, das Code speichert, wobei der Code konfiguriert ist, durch einen Prozessor ausführbar zu sein, um Operationen auszuführen, die Folgendes umfassen:
Empfangen eines Roh-Instruktorbewertungsdatensatzes, wobei der Roh-Instruktorbewertungsdatensatz eine Vielzahl von Bewertungen eines einzelnen Instruktors umfasst, wobei jede Bewertung der Vielzahl von Bewertungen einem numerischen Wert auf einer definierten Einstufungsskala entspricht;
Bestimmen einer Bewertungsschiefe der Vielzahl von Bewertungen, indem ein zweites Maß der zentralen Tendenz der Vielzahl von Bewertungen von einem ersten Maß der zentralen Tendenz der definierten Einstufungsskala subtrahiert wird, um ein Ergebnis zu erzeugen, und indem das Ergebnis durch eine Standardabweichung der Vielzahl von Bewertungen dividiert wird;
Vergleichen der Schiefe der Vielzahl von Bewertungen mit mindestens einer vergleichenden Bewertungsschiefe, um einen Schiefe-Vergleichsbericht zu erzeugen;
Bestimmen, ob der einzelne Instruktor basierend auf dem Schiefe-Vergleichsbericht eine Instruktorenschulung benötigt;
falls bestimmt wird, dass der einzelne Instruktor eine Instruktorenschulung benötigt, Identifizieren der erforderlichen Instruktorenschulung, die dem einzelnen Instruktor bereitzustellen ist; und
Zugänglichmachen der Bewertungsschiefe, des Schiefe-Vergleichsberichts und der erforderlichen Instruktorenschulung für einen oder mehrere Endnutzer.

## Revendications

1. Appareil (200) d'évaluation de notations d'instructeur, comprenant :
un processeur ; et
une mémoire qui stocke un code exécutable par le processeur pour :
recevoir (202) un ensemble de données brutes de notations d'instructeur, l'ensemble de données brutes de notations d'instructeur comprenant une pluralité de notations provenant d'un instructeur individuel, chacune de la pluralité de notations correspondant à une valeur numérique sur une échelle de notation définie ;
déterminer (204) une obliquité des notations de la pluralité de notations en soustrayant une deuxième mesure de tendance centrale de la pluralité de notations d'une première mesure de tendance centrale de l'échelle de notation définie pour générer un résultat, et en divisant le résultat par un écart-type de la pluralité de notations ;
comparer (206) les obliquités de la pluralité de notations à au moins une obliquité des notations comparative afin de générer un rapport de comparaison des obliquités ;
déterminer (208) si l'instructeur individuel a besoin d'une formation d'instructeur en se basant sur le rapport de comparaison des obliquités ;
s'il est déterminé (210) que l'instructeur individuel a besoin d'une formation d'instructeur, identifier une formation d'instructeur requise à fournir à l'instructeur individuel ; et
rendre (212) l'obliquité des notations, le rapport de comparaison des obliquités et la formation d'instructeur requise accessibles à un ou plusieurs utilisateurs finaux.

2. Appareil (200) selon la revendication 1, dans lequel la première mesure de tendance centrale est la moyenne de l'échelle de notation définie.

3. Appareil (200) selon la revendication 1, dans lequel la première mesure de tendance centrale est le mode de l'échelle de notation définie.

4. Appareil (200) selon l'une quelconque des revendications précédentes, dans lequel la deuxième mesure de tendance centrale est le mode de la pluralité de notations provenant de l'instructeur individuel.

5. Appareil (200) selon les revendications 1, 2 ou 3, dans lequel la deuxième mesure de tendance centrale est la médiane de la pluralité de notations provenant de l'instructeur individuel.

6. Appareil (200) selon la revendication 1, dans lequel la première mesure de tendance centrale est une valeur de référence prédéterminée.

7. Appareil (200) selon l'une quelconque des revendications précédentes, dans lequel la pluralité de notations correspond à une période d'évaluation.

8. Appareil (200) selon l'une quelconque des revendications précédentes, dans lequel la formation requise de l'instructeur est déterminée sur la base d'une amplitude de l'obliquité des notations dans le rapport de comparaison des obliquités.

9. Appareil (200) selon l'une quelconque des revendications précédentes, dans lequel l'échelle de notation définie est une échelle numérique de 1 à 5.

10. Appareil (200) selon l'une quelconque des revendications précédentes, dans lequel :
l'instructeur individuel est un instructeur de vol ; et
l'ensemble de données brutes de notations de l'instructeur comprend les notations de performance fournies par l'instructeur de vol après une séance d'entraînement au vol, facultativement,
dans lequel la formation d'instructeur requise identifiée pour l'instructeur de vol comprend des méthodologies d'enseignement spécifiques à l'aviation et des techniques de simulation de vol.

11. Appareil (200) selon l'une quelconque des revendications précédentes, dans lequel :
la mémoire stocke en outre un code exécutable par le processeur pour recevoir des sources de données supplémentaires ; et
les sources de données supplémentaires sont rendues accessibles à un ou plusieurs utilisateurs finaux, et/ou où le rapport de comparaison des obliquités comprend une représentation visuelle des obliquités de notations de l'ensemble de données brutes de notations d'instructeur.

12. Appareil (200) selon l'une quelconque des revendications précédentes, dans lequel la mémoire stocke en outre un code exécutable par le processeur pour :
recevoir un ensemble de données brutes de notations d'instructeur correspondant à chacun d'une pluralité d'instructeurs individuels (304-310) ;
générer un rapport de comparaison des obliquités pour chacun des instructeurs individuels ; et
analyser (302) les rapports de comparaison des obliquités générés afin de comparer les performances de chaque instructeur individuel à celles d'autres instructeurs de la pluralité d'instructeurs individuels.

13. Appareil (200) selon la revendication 12, dans lequel :
la réception de l'ensemble de données brutes de notations d'instructeur comprend de recevoir un ensemble de données brutes de notations d'instructeur comprenant une pluralité de notations correspondant à une pluralité de périodes d'évaluation (406-412) ; et
la mémoire stocke en outre un code exécutable par le processeur pour :
suivre (402) les changements dans les obliquités de notation de la pluralité de notations à partir de chacune de la pluralité de périodes d'évaluation ; et
ajuster (404) la formation requise de l'instructeur en fonction des changements observés dans les obliquités des notations au fil du temps, facultativement,
où la mémoire stocke en outre un code exécutable par le processeur pour :
analyser les obliquités des notations de la pluralité de notations à partir de chacune de la pluralité de périodes de notation afin d'identifier les tendances des obliquités des notations sur la pluralité de périodes de notation ; et
générer une recommandation de formation basée sur les tendances identifiées.

14. Procédé (500) d'évaluation de notations d'instructeur, comprenant :
la réception (502) d'un ensemble de données brutes de notations d'instructeur, l'ensemble de données brutes de notations d'instructeur comprenant une pluralité de notations provenant d'un instructeur individuel, chacune de la pluralité de notations correspondant à une valeur numérique sur une échelle de notation définie ;
la détermination (504) d'une obliquité des notations de la pluralité de notations en soustrayant une deuxième mesure de tendance centrale de la pluralité de notations d'une première mesure de tendance centrale de l'échelle de notation définie pour générer un résultat, et en divisant le résultat par un écart-type de la pluralité de notations ;
la comparaison (506) des obliquités de notations de la pluralité de notations à au moins une obliquité des notations comparative afin de générer un rapport de comparaison des obliquités ;
la détermination (508) du fait que l'instructeur individuel a besoin, ou non, d'une formation d'instructeur en se basant sur le rapport de comparaison des obliquités ;
s'il est déterminé que l'instructeur individuel a besoin d'une formation d'instructeur, l'identification (510) d'une formation d'instructeur requise à fournir à l'instructeur individuel ; et
la mise à disposition (512) des obliquités des notations, du rapport de comparaison des obliquités et de la formation d'instructeur requise à un ou plusieurs utilisateurs finaux.

15. Produit programme pour évaluer des notations d'instructeur comprenant un support de stockage lisible par ordinateur stockant un code, le code étant configuré pour être exécutable par un processeur pour exécuter des opérations comprenant :
la réception d'un ensemble de données brutes de notations d'instructeur, l'ensemble de données brutes de notations d'instructeur comprenant une pluralité de notations provenant d'un instructeur individuel, chacune de la pluralité de notations correspondant à une valeur numérique sur une échelle de notation définie ;
la détermination d'une obliquité des notations de la pluralité de notations en soustrayant une deuxième mesure de tendance centrale de la pluralité de notations d'une première mesure de tendance centrale de l'échelle de notation définie pour générer un résultat, et en divisant le résultat par un écart-type de la pluralité de notations ;
la comparaison des obliquités de notations de la pluralité de notations à au moins une obliquité des notations comparative afin de générer un rapport de comparaison des obliquités ;
la détermination du fait que l'instructeur individuel a besoin, ou non, d'une formation d'instructeur en se basant sur le rapport de comparaison des obliquités ;
s'il est déterminé que l'instructeur individuel a besoin d'une formation d'instructeur, l'identification de la formation d'instructeur requise à fournir à l'instructeur individuel ; et
la mise à disposition des obliquités des notations, du rapport de comparaison des obliquités et de la formation d'instructeur requise à un ou plusieurs utilisateurs finaux.
